# EUROPÄISCHE PATENTSCHRIFT

(11) **EP 3 315 812 B1**
(45) Veröffentlichungstag und Bekanntmachung des Hinweises auf die Patenterteilung: **01.07.2020**
(21) Anmeldenummer: 17182936.9
(22) Anmeldetag: 25.07.2017
(51) Int. Cl.: F16F 9/04, F16F 9/05

(54) **LUFTFEDERELEMENT**
AIR SPRING UNIT
ÉLÉMENT DE RESSORT PNEUMATIQUE

(30) Priorität: 27.10.2016 DE 102016221203
(43) Veröffentlichungstag der Anmeldung: 02.05.2018
(73) Patentinhaber: ContiTech Luftfedersysteme GmbH, 30165 Hannover (DE)
(72) Erfinder: Kolle, Christian, 31275 Lehrte (DE); Stöter, Bernd, 30880 Laatzen (DE)
(74) Vertreter: Kilsch, Armin Ralph

(56) Entgegenhaltungen:
- EP-A1- 2 253 491
- WO-A1-02/40888
- WO-A1-2004/018895
- WO-A1-2010/019862
- DE-A1-102005 046 493
- JP-A- H07 190 118
- JP-A- S62 266 240
- US-A- 3 897 941
- US-A1- 2012 015 182
- US-A1- 2012 240 817

## Beschreibung

Die Erfindung betrifft ein Luftfederelement mit einem Arbeits- oder Federraum, welcher begrenzt wird durch zwei koaxial beabstandet angeordnete und gegensinnig wirkende Luftfederkolben, einem den Abstand zwischen den Kolben überbrückenden zylindrisch-rohrförmigen Mantel, der eine in Richtung der Kolben sich beidseitig erstreckende Wandung ausbildet, die über einen Teilbereich der Kolben letztere unter Bildung eines Ringspaltes bzw. Ringraumes umgibt, und zwei den jeweiligen Kolben zugeordneten Rollbälge aus elastomerem Material, die jeweils einerseits am Kolbenende und andererseits an der Wandung befestigt sind und unter Ausbildung einer Rollfalte im Ringspalt zwischen Wandung und jeweiligem Kolben abrollen.

Luftfederelemente, z. B. Luftfedern für Industrie- oder Fahrzeuganwendungen, enthalten in der Regel einen Deckel als oberes Anschlussteil, einen Elastomerbalg mit eingebetteten Festigkeitsträgern, die aus Einzellagen parallel angeordneter Fäden bestehen, wobei in der Regel zwei Lagen in gekreuzter Anordnung im Elastomerbalg eingebettet sind, und ein unteres Anschlussteil, das je nach Balgtype als Kolben oder ebenfalls als Deckel ausgeführt ist. In Fahrzeuganwendungen sind Luftfederelemente in der Regel zwischen einer gefederten und einer ungefederten Masse angeordnet, das heißt also beispielsweise zwischen einer Karosserie und einem Fahrwerk eines Fahrzeugs.

Das Innengummi des Elastomerbalgs/Rollbalgs, d.h. die innere Lage des Balges besteht üblicherweise aus einem Elastomer-Werkstoff mit größerer Luftundurchlässigkeit und soll die Balgwand gegen die eingeschlossene, normalerweise unter Druck stehende Luft abdichten.

Rollbälge sind üblicherweise so ausgebildet, dass sie unter Innendruck eine zylindrische Außenmantelfläche bilden. Beim bestimmungsgemäßen Federvorgang in Axialrichtung des Luftfederelements rollt ein Teil des Balges zwischen dem kleinen Durchmesser und dem großen Durchmesser des Kolbens am Außenumfang des Kolbens ab. Dabei sind die Bälge in der Regel jeweils mit Klemm- oder Spannringen an Deckel und Kolben befestigt.

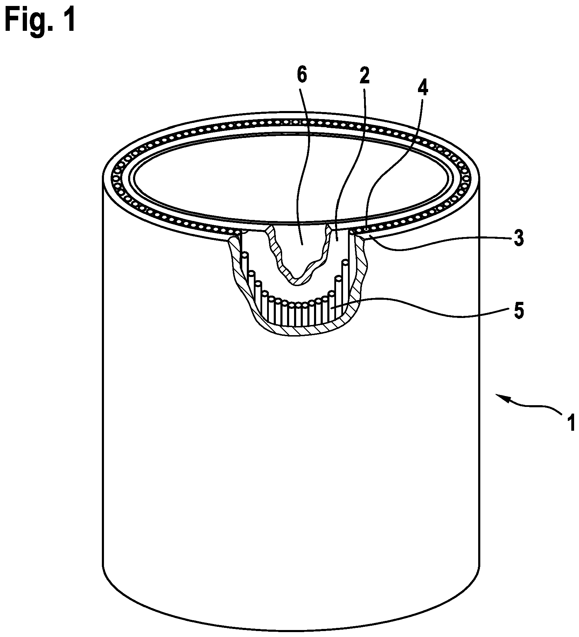

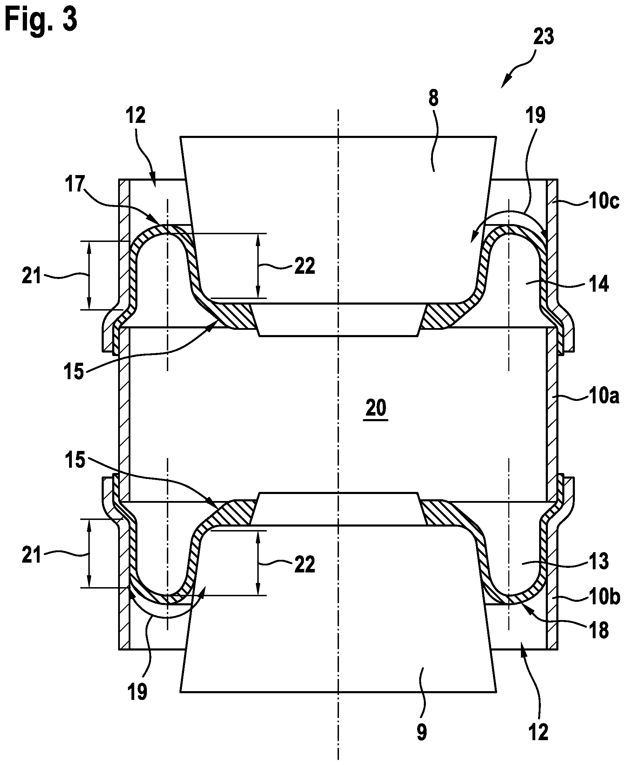

Einen solchen Rollbalg offenbart die DE 102010000167 A1. Die dortigen Fig.1 und 3 zeigen einen entsprechenden Schlauchrollbalg in den beiden Endstellungen des axialen Federvorgangs, Fig.1 zeigt die minimale Höhe bei voller Einfederung und Fig.3 die maximale Höhe bei maximaler Ausfederung. Es ist in der Zusammenschau erkennbar, dass die Länge des Balges viel größer ist als es für die ausschließliche Realisierung des Abrollvorganges beim normalen Betrieb erforderlich wäre. So besitzt die äußere Mantelfläche des Balgs im druckbelasteten Zustand bei minimaler Höhe des Luftfederelements in der Regel in etwa die Länge des Kolbens. Diese Mantelfläche ist in Bezug auf den normalen Federvorgang statisch und nimmt nicht an Abrollbewegungen teil.

Weiterhin sind Ausführungen von Luftfedern bekannt, bei denen sich die äußere Schlauchrollbalg-Mantelfläche in einem zylindrischen Bauteil innen abstützt. Die DE 10163818 A1 und die DE 10038197 C2 offenbaren eine derartige Konstruktion.

Ebenfalls bekannt sind Luftfederelemente, bei denen beide Anschlusselemente als Kolben ausgebildet sind. Solche Luftfederelemente mit koaxial beabstandet angeordneten gegensinnig wirkenden Doppelkolben sind in der Regel mit einem den Abstand zwischen den Kolben überbrückenden zylindrisch-rohrförmigen Mantel versehen, wobei zwischen den Kolben ein Rollbalg aus elastomerem Material vorgesehen ist, der unter Ausbildung einer doppelten Rollfalte im Ringspalt zwischen rohrförmigem Mantel und jeweiligem Kolben abrollt.

Einen solches Luftfederelement mit Doppelkolben offenbart die DE 1 049 248 A. Der dort gezeigte einteilige Rollbalg bildet sowohl oben als auch unten eine Rollfalte aus und ist in seinem mittleren Bereich auf seiner Außenseite mit einen Ringgürtel umgeben, so dass ein nicht dehnbarer Abschnitt des Rollbalgs von beträchtlicher Länge entsteht. Hierdurch wird eine sehr weiche, angenehme Federung bereitgestellt. Auch hier ist erkennbar, dass die Länge des Rollbalgs viel größer ist als es für die ausschließliche Realisierung des Abrollvorganges beim normalen Betrieb erforderlich wäre.

Die DE 27 50 667 B1 offenbart eine Luftfeder für Kraftfahrzeuge, bei der starr über eine Zugstange miteinander verbundene Kolben unterschiedlichen Durchmessers und ein oder mehrere Rollbälge das Federvolumen bzw. den Arbeitsraum bilden. Der oder die Rollbälge sind außenseitig durch einen Mantel abgestützt. Die Konusformen von Kolben und Mantel sind dabei so ausgelegt, dass sich beim Abrollen möglichst geringe Volumenänderungen und ein weiches Federungsverhalten ergeben. Eine Ausführungsform mit mehreren Rollbälgen ist zwar nicht erkennbar, jedoch ist auch hier die Länge des einteiligen Balges viel größer, als es für den Abrollvorganges erforderlich wäre.

Die bei Luftfedern aller Typen verwendeten Rollbälge aus Elastomerwerkstoffen sind natürlich nicht absolut gasdicht. Abhängig vom Permeationskoeffizienten des jeweiligen Elastomerwerkstoffs entweicht bzw. diffundiert unter Innendruck permanent ein Teil des Gasvolumens. In der Regel stehen Luftfedern im Betrieb mit einer Druckluftquelle in Verbindung, so dass dieser Verlust stets ausgeglichen werden kann. Es sind auch Anwendungen bekannt, in denen die Luftfedern mit einem sogenannten Tankventil versehen sind. Hier erfolgt keine permanente Druckversorgung, sondern nur periodisch ein Wiederauffüllen je nach Gasverlust.

Bei Luftfedern der oben genannten Art ist aufgrund der Länge und der damit großen Oberfläche der Rollbälge die Permeation konstruktionsbedingt relativ hoch. Insbesondere dann, wenn ein Teil der Rollbalg-Mantelfläche, wie oben dargelegt, beim normalen Federvorgang für Rollbewegungen gar nicht erforderlich ist und nur bei wenigen extremen Ausfederungen gebraucht wird, ist die Balgoberfläche groß und erhöht die Permeation. Eine Möglichkeit, hier entgegenzuwirken, bestünde in einer Erhöhung der Balgwanddicke. Dies würde zwar die Permeation verringern, sich aber nachteiliger Weise negativ auf die dynamischen Eigenschaften des Luftfederelements auswirken.

Ein flächiger Kontakt der Balgaußenfläche am Innenumfang einer zylindrischen Abstützung, wie in der DE 10163818 A1, der DE 1 049 248 A und der DE 27 50 667 B1 offenbart, kann die Permeation in diesem Bereich auch nicht verhindern, auch wenn die Abstützung aus gasdichtem Werkstoff besteht.

Aufgrund der hohen dynamischen Anforderungen an Luftfedern kommen zudem als übliche Rollbalg-Elastomere Werkstoffe zum Einsatz, die auf Naturkautschuk (NR), Butadien-Kautschuk (BR), Styrol-Butadien-Kautschuk (SBR) und Chloropren-Kautschuk (CR) aufgebaut sind. Diese Werkstoffe besitzen aber per se bereits eine höhere und damit für die Luftfeder-Anwendung ungünstigere Permeabilität.

Es wurde bereits überlegt, auf der Innenseite von elastomeren Körpern besondere Beschichtungen oder Folien anzuordnen, um die teilweise hohen Permeationsraten zu verringern. So ist bei Reifen die Verwendung einer Folie aus Elastomer-Thermoplast-Legierungen (TPE-V, Dynamically Vulcanized Alloys - DVA) als innen angeordnete Permeationssperre bekannt, wie dies in der EP 2824132A1 und WO 2012/125195A1 offenbart ist. Elastomer-Thermoplast-Legierungen erhält man durch Verblenden von Thermoplasten mit feindispersen vernetzten Kautschuken. Eine solche DVA Folie lässt sich zwar dehnen, jedoch nur schlecht stauchen. Sie ist daher a priori wenig für die Verwendung bei einem Schlauchrollbalg geeignet, bei dem durch die üblichen Verstärkungseinlagen im Kreuzverbund beim Abrollen der Balgwand in der Rollfalte im Elastomer ein mehrachsiger Spannungszustand und somit eine mehrachsige Verformung mit Stauchung und Dehnung auftritt.

Die JP S 599 35 36 A (Abstract) lehrt dagegen eine auf der dem Druckraum abgewandten Seite angeordnete Fluorschicht, die die Gasdichtigkeit steigern soll. Bei der Anordnung der Fluorschicht auf der Außenseite besteht die Gefahr der Ablösung durch Blasenbildung zwischen der Balgwand und der Fluorschicht, weil das permeations-dichteste Material außen angeordnet ist.

Ein Ersatz von Luftfederelementen mit Bälgen/Rollbälgen durch Zylinder mit Kolben anderer Materialien stellt auch keine akzeptable Lösung dar, da allein in Bezug auf Stick-Slip-Verhalten, Haft- und Gleitreibung, Lebensdauer und Dämpfung die Rollbalglösungen erheblich Vorteile besitzen, von Gewichts- und Bauraumproblemen einmal abgesehen.

Die JP H07 190118A offenbart eine Luftfederelement gemäß des Oberbegriffes des Anspruchs 1 mit einer doppelten Rollfalte, bei dem der oder die Rollbälge mit einer zylindrischen Tilgermasse versehen sind, so dass das Luftfederelement nicht nur als Feder, sondern auch als Dämpfer verwendet werden kann. In Bezug auf Dichtigkeit oder Permeabilität sind hier keine Vorteile offenbart.

Die US 2012/015182 A1 offenbart ein Herstellungsverfahren für einen Schichtwerkstoff niedriger Permeabilität sowie einen daraus hergestellten Reifen. Die dortigen Lösungen lassen sich jedoch nicht ohne Weiteres auf Luftfederelemente mit Rollfaltenbälgen übertragen.

Für die Erfindung bestand also die Aufgabe, die im Stand der Technik vorhandenen Nachteile bei Luftfederelementen zu beseitigen und ein Luftfederelement für hohe Betriebsdrücke bereitzustellen, welches Gas als Arbeitsmedium verwendet und auch ohne permanente externe Druckversorgung eine deutlich verringerte Leckagerate besitzt. Gelöst wird diese Aufgabe durch die Merkmale des Hauptanspruchs. Weitere vorteilhafte Ausbildungen sind in den Unteransprüchen offenbart.

Dabei entsprechen die Rollbalglängen der jeweiligen Rollbälge abzüglich der erforderlichen Einspannlängen im Wesentlichen dem um die Rollfaltenlänge bzw. um den Rollfaltenbogen vergrößerten Rollweg, wobei der Rollweg sich aus der Summe der jeweiligen wandungs- und kolbenseitigen Rollwegsanteile der Rollbälge zusammensetzt. Damit wird der eigentliche Innenraum / das Innenvolumen des Arbeitsraums im Wesentlichen also durch die Länge des rohrförmigen Mantels bestimmt und nicht durch eine lange zylindrische Ausdehnung der Balgwandung eines einteiligen Rollbalgs, die für den Federungsweg nicht gebraucht wird. Da beide Kolben und die Wandung des rohrförmigen Mantels aus Metall oder Kunststoff bestehen, jedenfalls aus starren Materialien mit vernachlässigbarer Permeationsrate, wird die Leckagerate des Luftfederelementes insgesamt stark reduziert.

Dabei weisen der bzw. die Rollbälge auf ihrer dem Arbeits- oder Federraum zugewandten Innenseite eine Folie oder Schicht aus einer mittels dynamischer Vulkanisationen erhaltenen Elastomer-Thermoplast-Legierung auf (DVA Folie). Eine solche DVA-Folie besitzt eine sehr niedrige Permeationsrate und verhindert dadurch, dass sie an der inneren Elastomerschicht anhaftet, dass sie direkt mit dem Fluid im Federelement in Kontakt ist und dass sie die Balgwand vom Druckfluid abschirmt, fast vollständig jegliche Leckage durch die Rollbalgwand.

Die Rollbälge sind darüberhinaus mit im Wesentlichen längs in Abrollrichtung und im Wesentlichen parallel zur Achse des Luftfederelementes eingebetteten Festigkeitsträgern versehen sind. Grundsätzlich ist eine solche Ausbildung bekannt, zum Beispiel durch die DE 3643073 A1. Dort ist eine solche Anordnung von Festigkeitsträgern vorgesehen, um mehrachsige Spannungszustände innerhalb der Wand der Luftfeder zu vermeiden. Im Zusammenspiel mit der hier vorgesehenen DVA-Folie weist diese Ausführung jedoch besondere Vorteile auf. Eine DVA Folie lässt sich zwar dehnen, jedoch nur sehr schlecht stauchen. Bei der Verwendung der parallelen Festigkeitsträger lassen sich Letztere dann so im Matrixverbund anordnen, dass beim Abrollen des Rollbalges an der innenliegenden DVA-Folie lediglich Zugspannungen/Dehnungen entstehen und keine Druckspannungen. Weiterhin weisen die Rollbälge zusätzlich auf der dem Druckraum bzw. dem Arbeits- oder Federraum abgewandten Seite der DVA-Folie eine Schicht aus Butylgummi oder Nitril-Butadien-Kautschuk, d.h. NBR-Gummi auf. Dadurch lässt sich die Leckagerate weiter reduzieren.

Eine vorteilhafte Weiterbildung besteht darin, dass die Rollbälge an der Innenseite der Wandung durch einen Klemm- oder Spannring befestigt sind. Dies vereinfacht insbesondere die Montage.

Eine weitere vorteilhafte Ausbildung besteht darin, dass der den Abstand zwischen den Kolben überbrückende zylindrisch-rohrförmige Mantel aus mehreren konzentrisch übereinander angeordneten rohrförmigen Wandungsteilen besteht und mindestens einer der den jeweiligen Kolben zugeordneten Rollbälge einerseits am Kolbenende befestigt ist und andererseits zwischen den Wandungsteilen auf die Außenseite der Wandung geführt und dort befestigt ist. Vorzugsweise besteht der rohrförmige zylindrische Mantel aus drei konzentrisch übereinander angeordneten rohrförmigen Wandungsteilen, wobei beide Rollbälge auf der Wanderungsseite nach außen gezogen sind.

Damit ist die Befestigung der Rollbälge am Wandungsende so ausgebildet, dass die Schnittflächen der Rollbalgenden außerhalb des Arbeitsraums liegen. Auf diese Weise wird verhindert, dass das im Druckraum befindliche Fluid in die Fäden der Festigkeitsträgerlage eindringen und auf diesem Wege dann auch in das Balgmaterial der Balgwand / in die Balgmatrix eindringen kann. Die andere Seite der Befestigung des Rollbalgs am Kolben ist diesbezüglich nicht oder weniger gefährdet, da sich dort der Dichtwulst befindet.

Üblicherweise entspricht bei dem erfindungsgemäßen Luftfederelement mit gegensinnig angeordneten Doppelkolben der Rollweg beim Einfedern des einen Rollbalgs dem Rollweg des anderen Rollbalgs. Es können aber auch unterschiedlich lange Rollwege vorgesehen sein, ohne den wesentlichen Erfindungsgedanken zu verlassen.

Eine weitere vorteilhafte Ausbildung besteht darin, dass die Rollbälge zusätzlich auf seiner dem Arbeits- oder Federraum zugewandten Innenseite eine Schicht aus Epichlorhydrinelastomer (ECO) aufweisen. Auch dadurch lässt sich die Leckagerate weiter reduzieren.

Insgesamt wirken also die Maßnahmen der Verringerung der Länge des jeweiligen elastomeren Rollbalgs, der Ersatz der fehlenden Länge durch einen rohrförmigen Mantel bzw. dessen Wandung, die Innenbeschichtung und die dafür förderlich angepasste Ausbildung der Festigkeitsträger auf eine überraschende Weise synergistisch in der Weise, dass eine besonders ausgeprägte Dichtigkeit und äußerst geringe Permeationsrate erreicht wird.

Eine weitere vorteilhafte Ausbildung besteht darin, dass die Rollbälge mit mehreren Lagen von eingebetteten Festigkeitsträgern versehen sind. Mit einer solchen Anordnung lässt sich die Festigkeit der durch die Rollfalte beanspruchten jeweiligen Rollbalgwand erhöhen.

Eine weitere vorteilhafte Ausbildung besteht darin, dass die mehreren Lagen von eingebetteten Festigkeitsträgern sich spitzwinklig kreuzen. Der Winkel, unter dem sich die Lagen dann kreuzen, sowie die Dehnung des Festigkeitsträgers und die Anordnung der Lagen innerhalb der Wanddicke der Balgwand ist gemäß den obigen Ausführungen so auszuwählen, dass die auf der inneren Balgwand angeordneten DVA Folie auch durch den dann entstehenden mehrachsigen Spannungszustand nicht gestaucht wird.

Anhand eines Ausführungsbeispiels soll die Erfindung näher erläutert werden. Es zeigen
- Fig. 1: den Aufbau der Balgwand des Luftfederrollbalgs eines Luftfederelementes,
- Fig. 2: ein Luftfederelement

Fig. 1 zeigt im Detail zunächst den Aufbau der Balgwand eines Rollbalgkörpers 1 eines Luftfederelementes für eine Kraftfahrzeugfederung. Der Rollbalgkörper 1 ist hier noch nicht zwischen Kolben und Wandung befestigt bzw. eingespannt. Hier ist auch nur ein mittlerer Teil des Rollbalgs 1 in seiner ursprünglichen Herstellungsform dargestellt, nämlich als torusförmiger Körper bzw. Zylinder und ohne etwa den Wulstring zur Befestigung am Kolben. Diese vereinfachte Darstellung hilft beim Verständnis des Aufbaus mit der DVA Folie.

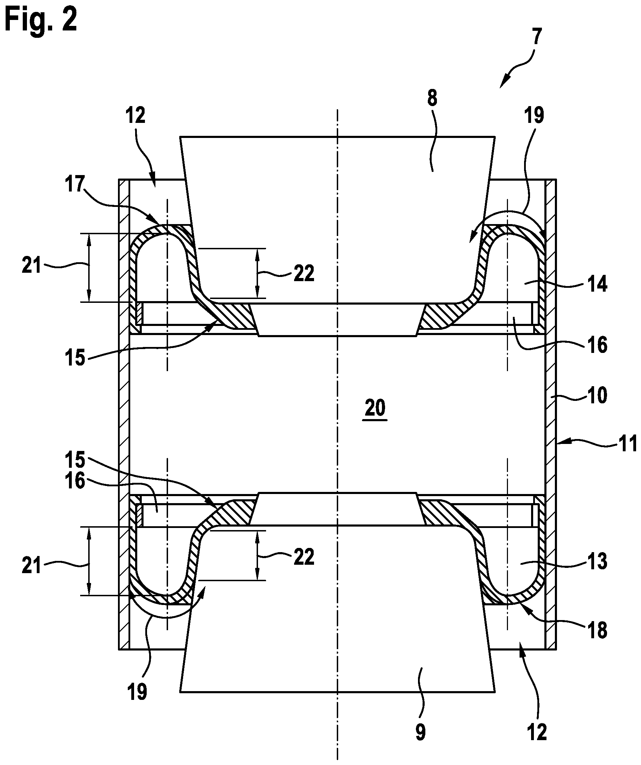

Zwischen einer inneren Elastomerschicht 2 des Rollbalgs 1 und seiner äußeren Elastomerschicht 3 ist eine Lage Festigkeitsträger 4 eingebettet. Der Festigkeitsträgerlage besteht aus Fäden bzw. Corden 5, welche parallel zueinander in Axialrichtung des Balges angeordnet sind. Auf der Innenseite der inneren Elastomerschicht 2 ist eine DVA-Folie 6 vorgesehen, die eine sehr geringe Permeationsrate der Balgwand 1 bewirkt. An der Stirnfläche 12 des Balges 1 liegt die Festigkeitsträgerlage 4 frei. Zur Montage des Rollbalgs für die Herstellung eines Luftfederelements wird das obere Ende des in Figur 1 gezeigten Rollbalgs an der Wandung befestigt und das untere Ende am Luftfederkolben, wie dies am besten in der Zusammenschau mit der Figur 2 deutlich wird.

In Fig. 2 ist solch ein Luftfederelement 7 mit zwei Luftfederkolben dargestellt, nämlich zwei koaxial beabstandet angeordnete und gegensinnig wirkende Luftfederkolben 8, 9. Das Luftfederelement ist zwischen einer hier nicht näher dargestellten Karosserie eines PKW als gefederter Masse und einem Fahrwerk als ungefederter Masse eingespannt. Beide Kolben 8, 9 sind in Metall ausgeführt.

Der Abstand zwischen den Kolben 8, 9 wird überbrückt durch einen zylindrisch-rohrförmigen Mantel 10, der eine in Richtung der Kolben 8, 9 sich beidseitig erstreckende Wandung 11 ausbildet, die über einen Teilbereich der Kolben letztere unter Bildung eines Ringspaltes bzw. Ringraumes 12 umgibt. Insofern ersetzt dieser rohrförmige Mantel einen üblicherweise bei Luftfedern vorhandenen langen zylindrischen Teil der Rollbalgwand.

Man erkennt in der Fig. 2 auch die beiden den jeweiligen Kolben zugeordneten Rollbälge 13, 14 aus elastomerem Material, die jeweils mit ihrem Dichtwulst 15 einerseits am Kolbenende und andererseits mit einem Spannring 16 an Innenseite der Wandung 11 befestigt sind. Die Rollbälge 13 und 14 bilden zwischen den Befestigungen die Rollfalten 17 und 18 mit der jeweiligen Bogenlänge 19 der Rollfalte aus. Durch Ausbildung dieser Rollfalten 17 und 18 können die Rollbälge im Ringspalt 12 zwischen Wandung 11 und jeweiligem Kolben 8, 9 abrollen. Der eigentliche Raum / das Volumen des Arbeits- und Federraums 20 wird also im Wesentlichen durch die Kolben 8 und 9, die Rollbälge 13, 14 und dem zylindrisch-rohrförmigen Mantel 10 gebildet.

Die Rollbalglängen der jeweiligen Rollbälge abzüglich der erforderlichen Einspann- oder Montagelängen unter dem Spannring 16 und für den Wulstring 15 sind dabei so kurz ausgebildet, dass sie im Wesentlichen dem um die Rollfaltenlänge bzw. um den Rollfaltenbogen 19 vergrößerten Rollweg entsprechen, wobei der Rollweg sich aus der Summe der jeweiligen wandungs- und kolbenseitigen Rollwegsanteile 21 und 22 der Rollbälge 13 und 14 zusammensetzt.

Im Vergleich zu üblichen Schlauchrollbälgen besitzt die offenbarte Konstruktion eine kleinere Balgoberfläche und verringert hiermit konstruktiv die Permeation am Außenumfang. Die kleinere Balgoberfläche wird dadurch erreicht, dass der zylindrische rohrförmige Mantel bzw. die Wandung 10 einen Teil der üblichen zylindrischen Balglänge ersetzt.

Während des Abrollvorgangs werden durch die offenbarten Ausführungen die Verformungen der Balgwand und damit die Beanspruchung der DVA-Folie minimiert. Betrachtet man den am Kolben abgestützten Balg als Ausgangszustand für den Verbund aus DVA-Folie, Elastomer und achsparallelen Fäden, dann bewirkt das Abrollen beim Ausfedern (Vergrößerung des Kolbenabstands) eine Vergrößerung der Umfangslänge und damit eine Dehnung der DVA-Folie in Umfangsrichtung. In Axialrichtung ändert sich die Länge der Balgwand nicht. Die Fäden erfahren durch den Innendruck eine Zugbelastung, die je nach Fadenkonstruktion zu einer gewissen Dehnung führt, keinesfalls zu einer Stauchung. Diese Fadendehnung kompensiert die sonst auftretende Stauchung auf der Innenfläche der Rollfalte (Erläuterung: kleinerer Krümmungsradius auf der Innenseite der Rollfalte). Wären die Fäden als Kreuzverbund aus zwei Lagen in einem Winkel deutlich abweichend von der Achsrichtung ausgeführt, würde der Abrollvorgang zwangsläufig zu einer mehrachsigen Belastung der Folie als Kombination aus erheblicher Stauchung und Dehnung führen.

Fig. 3 zeigt eine weitere Ausbildung 23 des offenbarten Luftfederelementes, bei dem der den Abstand zwischen den Kolben überbrückende zylindrisch-rohrförmige Mantel aus drei konzentrisch übereinander angeordneten rohrförmigen Wandungsteilen besteht, nämlich aus dem mittleren Teilstück 10a und den beiden äußeren Teilstücken 10b und 10c. Die Wandlungsteile sind in Form einer Muffenverbindung 10a / 10b sowie 10a / 10c zusammengesteckt, wobei jeweils ein Spalt zur Aufnahme der Rollbalgwand erhalten ist. Die den jeweiligen Kolben zugeordneten Rollbälge 13 und 14 sind einerseits am Kolbenende befestigt ist und andererseits im Spalt zwischen den Wandungsteilen auf die Außenseite der Wandung geführt und dort befestigt, hier durch eine Klemmung in der Muffenverbindung. Natürlich ist auch eine Befestigung durch einen von außen wirkenden Spannring möglich. Dadurch sind die Enden der Rollbälge bzw. deren Stirnflächen außerhalb des Arbeitsraumes 20 angeordnet, so dass auf diese Weise verhindert wird, dass das im Arbeitsraum befindliche Fluid über die Fäden in die Balgmatrix einbringen kann.

Durch die erfindungsgemäße Konstruktion erhält man ein gasgefülltes Federelement, das ohne externe Druckversorgung möglichst lange bis zu einem vorgegebenen Grenzwert betrieben werden kann, ohne dass Gas nachgefüllt werden muss. Gegenüber einem Federelement in Kolben-Zylinder Konstruktion weist das erfindungsgemäße Gasfederelement den so genannten Stick-Slip-Effekt nicht auf, das heißt es gibt kein so genanntes "Losbrechen" oder ruckelndes Anlaufen bei einer Gasfeder. Weitere Vorteile sind geringe Dämpfung des Federelementes, kein Abrieb an gleitenden Dichtungen und höherer Betriebsdruck durch Abstützung in einem zylindrischem Bauteil/Stützglocke. Das erfindungsgemäße Luftfederelement besitzt auch bei hohen Lastwechselzahlen zwischen min. und max. Position eine überaus geringe Leckage. Das erfindungsgemäße Luftfederelement ist auch in der Lage, größere Hubbewegungen auf gekrümmten Bahnen durchzuführen.

Natürlich können die erfindungsgemäßen Luftfederelemente nicht nur als Luftfederungen im Kraftfahrzeugbereich eingesetzt werden, sondern - evtl. mit fachmännischen Anpassungen - auch im Industriebereich sowie in Anwendungen als Kompensatoren oder als Luftspannelemente.

### Bezugszeichenliste (Teil der Beschreibung)

- 1: Rollbalgkörper
- 2: Innere Elastomerschicht
- 3: Äußere Elastomerschicht
- 4: Festigkeitsträgerlage
- 5: Fäden, Corde
- 6: DVA- Folie
- 7: Erfindungsgemäßes Luftfederelement
- 8: Oberer Luftfederkolben
- 9: Unterer Luftfederkolben
- 10: rohrförmiger Mantel
- 10a: mittleres Teilstück des rohrförmigen Mantels 10
- 10b: unteres Teilstück des rohrförmigen Mantels 10
- 10c: oberes Teilstück des rohrförmigen Mantels 10
- 11: Wandung
- 12: Ringspalt bzw. Ringraum
- 13: Rollbalg
- 14: Rollbalg
- 15: Dichtwulst
- 16: Spannring
- 17: Rollfalte
- 18: Rollfalte
- 19: Bogenlänge der Rollfalte, Rollfaltenbogen
- 20: Arbeits- und Federraum
- 21: Rollweg, wandungsseitig
- 22: Rollweg, kolbenseitig
- 23: Erfindungsgemäßes Luftfederelement

## Patentansprüche

1. Luftfederelement (7) mit einem Arbeits- oder Federraum (20), welcher begrenzt wird durch
- zwei koaxial beabstandet angeordnete und gegensinnig wirkende Luftfederkolben (8, 9),
- einem den Abstand zwischen den Kolben überbrückenden zylindrisch-rohrförmigen Mantel (10), der eine in Richtung der Kolben (8, 9) sich beidseitig erstreckende Wandung (11) ausbildet, die über einen Teilbereich der Kolben letztere unter Bildung eines Ringspaltes bzw. Ringraumes (12) umgibt,
- und zwei den jeweiligen Kolben zugeordneten Rollbälge (13, 14) aus elastomerem Material, die jeweils einerseits am Kolbenende und andererseits an der Wandung befestigt sind und unter Ausbildung einer Rollfalte (17, 18) im Ringspalt (12) zwischen Wandung und jeweiligem Kolben (8, 9) abrollen,
wobei die Rollbalglängen der jeweiligen Rollbälge abzüglich der erforderlichen Einspannlängen im Wesentlichen dem um die Rollfaltenlänge bzw. um den Rollfaltenbogen (19) vergrößerten Rollweg entspricht, wobei der Rollweg sich aus der Summe der jeweiligen wandungs- und kolbenseitigen Rollwegsanteile (21, 22) der Rollbälge (13, 14) zusammensetzt, **dadurch gekennzeichnet, dass** die Rollbälge (13, 14) auf ihrer dem Arbeits- oder Federraum (20) zugewandten Innenseite eine Folie oder Schicht (6) aus einer mittels dynamischer Vulkanisationen erhaltenen Elastomer-Thermoplast-Legierung aufweisen (DVA Folie) sowie mit im Wesentlichen längs in Abrollrichtung und im Wesentlichen parallel zur Längsachse des Luftfederelementes (7) eingebetteten Festigkeitsträgern (5) versehen sind, wobei die Rollbälge (13, 14) zusätzlich auf ihrer dem Arbeits- oder Federraum (20) abgewandten Seite der DVA-Folie eine Schicht aus Butylgummi oder eine Schicht aus Nitril-Butadien-Kautschuk aufweisen.

2. Luftfederelement nach Anspruch 1, bei dem die Rollbälge (13, 14) an der Innenseite der Wandung durch einen Klemm- oder Spannring befestigt sind.

3. Luftfederelement nach Anspruch 1, bei dem der den Abstand zwischen den Kolben überbrückende zylindrisch-rohrförmige Mantel aus mehreren konzentrisch übereinander angeordneten rohrförmigen Wandungsteilen (10a, 10b, 10c) besteht und mindestens einer der den jeweiligen Kolben zugeordneten Rollbälge (13, 14) einerseits am Kolbenende befestigt ist und andererseits zwischen den Wandungsteilen auf die Außenseite der Wandung geführt und dort befestigt ist.

4. Luftfederelement nach einem der Ansprüche 1 bis 3, bei dem die Rollbälge (13, 14) zusätzlich auf ihrer dem Arbeits- oder Federraum (20) zugewandten Innenseite eine Schicht aus Epichlorhydrinelastomer (ECO) aufweisen.

5. Luftfederelement nach einem der Ansprüche 1 bis 4, bei dem die Rollbälge (13, 14) mit mehreren Lagen von eingebetteten Festigkeitsträgern versehen sind, insbesondere mit mehreren Lagen von sich spitzwinklig kreuzenden eingebetteten Festigkeitsträgern.

## Claims

1. Air spring element (7) with a working or spring space (20) which is delimited by way of
- two air spring pistons (8, 9) which are arranged spaced apart coaxially and act in opposite directions,
- a cylindrical/tubular shell (10) which bridges the spacing between the pistons and configures a wall (11) which extends on both sides in the direction of the pistons (8, 9) and surrounds the pistons over a part region of the latter with the formation of an annular gap or annular space (12),
- and two rolling lobes (13, 14) made from an elastomeric material which are assigned to the respective pistons, are fastened on one side to the piston end and on the other side to the wall, and roll between the wall and the respective piston (8, 9) with the configuration of a rolling fold (17, 18) in the annular gap (12),
the rolling lobe lengths of the respective rolling lobes minus the required clamping lengths corresponding substantially to the rolling path which is enlarged by the rolling fold length or by the rolling fold curve (19), the rolling path consisting of the sum of the respective wall-side and piston-side rolling path proportions (21, 22) of the rolling lobes (13, 14), **characterized in that**, on their inner side which faces the working or spring space (20), the rolling lobes (13, 14) have a film or layer (6) made from an elastomer/thermoplastic alloy obtained by means of dynamic vulcanization processes (DVA film), and are provided with reinforcement materials (5) which are embedded substantially longitudinally in the rolling direction and substantially parallel to the longitudinal axis of the air spring element (7), the rolling lobes (13, 14) additionally having, on their side of the DVA film which faces away from the working or spring space (20), a layer made from butyl rubber or a layer made from nitrile butadiene rubber.

2. Air spring element according to Claim 1, in the case of which the rolling lobes (13, 14) are fastened to the inner side of the wall by way of a clamping or tension ring.

3. Air spring element according to Claim 1, in the case of which the cylindrical/tubular shell which bridges the spacing between the pistons consists of a plurality of tubular wall parts (10a, 10b, 10c) which are arranged concentrically above one another, and at least one of the rolling lobes (13, 14) which are assigned to the respective pistons is fastened on one side to the piston end and is guided on the other side between the wall parts onto the outer side of the wall and is fastened there.

4. Air spring element according to one of Claims 1 to 3, in the case of which the rolling lobes (13, 14) additionally have a layer made from epichlorohydrin elastomer (ECO) on their inner side which faces the working or spring space (20).

5. Air spring element according to one of Claims 1 to 4, in the case of which the rolling lobes (13, 14) are provided with a plurality of layers of embedded reinforcement materials, in particular with a plurality of layers of embedded reinforcement materials which cross at an acute angle.

## Revendications

1. Élément de suspension pneumatique (7) comprenant un espace de travail ou de suspension (20) qui est délimité par
- deux pistons de suspension pneumatique (8, 9) disposés de manière espacée coaxialement et agissant en sens inverse,
- une enveloppe tubulaire cylindrique (10) couvrant la distance entre les pistons, qui constitue une paroi (11) s'étendant des deux côtés dans la direction des pistons (8, 9), qui entoure les pistons sur une région partielle de ces derniers en formant un interstice annulaire ou un espace annulaire (12),
- et deux soufflets roulants (13, 14) en matériau élastomère, associés aux pistons respectifs, qui sont fixés à chaque fois d'une part à l'extrémité du piston et d'autre part à la paroi, et qui roulent en réalisant un pli de roulement (17, 18) dans l'interstice annulaire (12) entre la paroi et le piston respectif (8, 9),
les longueurs de soufflet roulant des soufflets roulants respectifs, moins les longueurs de serrage requises, correspondant essentiellement à la course de roulement plus la longueur du pli de roulement ou l'arc du pli de roulement (19), la course de roulement se composant de la somme des proportions respectives de courses de roulement (21, 22) des soufflets roulants (13, 14) du côté de la paroi et du côté du piston, **caractérisé en ce que** les soufflets roulants (13, 14) présentent, sur leur côté intérieur tourné vers l'espace de travail ou l'espace de suspension (20), une feuille ou une couche (6) constituée d'un alliage élastomère-thermoplastique obtenu par vulcanisations dynamiques (feuille DVA) et sont pourvus de renforts (5) incorporés essentiellement longitudinalement dans la direction de roulement et essentiellement parallèlement à l'axe longitudinal de l'élément de suspension pneumatique (7), les soufflets roulants (13, 14) présentant en outre, sur leur côté de la feuille DVA opposé à l'espace de travail ou à l'espace de suspension (20), une couche en caoutchouc butyle ou une couche en caoutchouc nitrile-butadiène.

2. Élément de suspension pneumatique selon la revendication 1, dans lequel les soufflets roulants (13, 14) sont fixés au niveau du côté intérieur de la paroi par un bague de serrage ou un anneau de serrage.

3. Élément de suspension pneumatique selon la revendication 1, dans lequel l'enveloppe tubulaire cylindrique couvrant la distance entre les pistons se compose de plusieurs parties de paroi tubulaires (10a, 10b, 10c) disposées concentriquement les unes au-dessus des autres et au moins l'un des soufflets roulants (13, 14) associés aux pistons respectifs est fixé d'une part à l'extrémité du piston et d'autre part est guidé entre les parties de paroi sur le côté extérieur de la paroi et y est fixé.

4. Élément de suspension pneumatique selon l'une quelconque des revendications 1 à 3, dans lequel les soufflets roulants (13, 14) présentent en outre sur leur côté intérieur tourné vers l'espace de travail ou de suspension (20) une couche en élastomère d'épichlorhydrine (ECO).

5. Élément de suspension pneumatique selon l'une quelconque des revendications 1 à 4, dans lequel les soufflets roulants (13, 14) sont pourvus de plusieurs couches de renforts incorporés, en particulier de plusieurs couches de renforts incorporés s'intersectant à angle aigu.
